# FASCICULE DE BREVET EUROPEEN

(11) **EP 0 638 007 B1**
(45) Date de publication et mention de la délivrance du brevet: **06.05.1998**
(21) Numéro de dépôt: 94906124.6
(22) Date de dépôt: 24.02.1994
(51) Int. Cl.: B23B 9/00

(54) **TOUR AUTOMATIQUE MULTIBROCHES**
MEHRSPINDELDREHAUTOMAT
AUTOMATIC MULTI-SPINDLE LATHE

(30) Priorité: 01.03.1993 FR 9302428
(43) Date de publication de la demande: 15.02.1995
(73) Titulaire: Habegger, Harold, CH-2738 Court (CH)
(72) Inventeur: Habegger, Harold, CH-2738 Court (CH)
(74) Mandataire: Patry, Didier Marcel Pierre
(86) Numéro de dépôt international: CH9400040
(87) Numéro de publication internationale: WO9420245

(56) Documents cités:
- EP-A- 0 113 997
- DE-C- 587 861
- DE-C- 1 777 269
- GB-A- 2 135 619

## Description

La présente invention concerne un tour automatique multibroches selon le preambule de la revendication 1 et comme connû du document US-A-3 535 962. Un tel tour est destiné à l'usinage, et plus particulièrement au décolletage de matières fournies sous forme de barres.

Les tours automatiques multibroches classiques sont des machines de structure et de fonctionnement complexes, en particulier sur le plan mécanique. Ces machines comportent une première partie fonctionnelle, dite de support des barres, qui assure l'alimentation, le maintien et l'entraînement des barres. Cette partie est pourvue d'un ensemble de broches dans lesquelles sont respectivement introduites les barres de matière en question qui font saillie desdites broches, vers des outils de coupe montés sur un bâti.

Ces broches qui sont toutes mobiles en rotation et qui sont aussi pour certaines mobiles en translation, sont regroupées sur un barillet qui est, lui aussi, conformé pour pouvoir se déplacer à la fois en direction axiale et en rotation, afin d'assurer le déplacement tour à tour de toutes les barres de matière vers les différents postes d'usinage. Ces postes d'usinage comportent des outils de coupe et/ou de refoulement de la matière, et les mouvements combinés du barillet permettent d'amener l'extrémité des barres à usiner en face des outils appropriés, pour qu'elles subissent des étapes de transformation successives, de poste à poste, à chaque fraction de tour du barillet.

On comprend donc que ces machines-outils doivent comporter un nombre élevé de pignons et de roues engrenant ensemble pour pouvoir entraîner en rotation tous ces organes mobiles, et pour leur fournir un couple mécanique nécessaire, tout en autorisant par ailleurs leur déplacement relatif, que ce soit en translation ou en rotation. On peut donc déjà constater que le nombre élevé de pièces dans cette première partie fonctionnelle entraîne, sur les tours classiques, un encombrement et un poids très importants.

En outre, les outils de coupe sont généralement montés sur des chariots porte-outil également mobiles, qui peuvent se déplacer généralement sur un seul axe et qui sont commandés en déplacement par l'intermédiaire de cames rotatives profilées pour assurer un déplacement spécifique des outils, à chaque poste de travail. Les cames sont toutes montées sur un arbre à cames unique, entraîné par un moteur.

De nouveau, dans cette seconde partie fonctionnelle du tour, dite d'usinage, où se concentrent les outils et plus généralement les moyens de façonnage de la matière, il est prévu de nombreuses roues et de nombreux pignons pour l'entraînement en rotation des cames, mais aussi et surtout une multitude de bras et de leviers dits de renvoi, capables de transmettre depuis lesdites cames, les mouvements de translation souhaités aux chariots porte-outil.

Là encore on comprend que sur les tours multibroches classiques, cette seconde partie fonctionnelle, en plus de son caractère complexe quant à sa construction, est massive et d'un poids très élevé.

En outre, les pièces sont agencées entre elles pour que le volume global de la machine ne soit pas trop exagéré, ce qui en complique d'autant la conception.

Il faut encore noter que dans ces tours classiques, les deux parties fonctionnelles, respectivement de support des barres et d'usinage, sont supportées et guidées par l'extérieur et sont installées sur un bâti rigide très imposant assurant en majeure partie la précision de l'usinage et donc sa qualité.

On notera encore que dans les tours multibroches classiques, la partie d'usinage est divisée en deux blocs entre lesquels l'opérateur peut accéder pour effectuer les réglages. L'opérateur doit donc se placer latéralement, à droite ou à gauche de la machine, ce qui demande un dégagement important autour de celle-ci. Ces tours tels qu'ils sont conçus occupent donc une surface au sol importante, ce qui nécessite des infrastructures en conséquence.

Le document US 3,535,962 décrit un tour multibroches qui comporte un bâti à l'intérieur duquel sont logés un ensemble de cames, ce bâti supportant des chariots porte-outils montés sur sa face avant, donc typiquement en position frontale. Ce bâti comporte en outre un alésage dans lequel un barillet est guidé en rotation. Dans cette configuration, le barillet est fixe en translation. La structure décrite dans ce document est classique, puisqu'elle prévoit l'utilisation d'un bâti rigide conventionnel et une disposition typique où le bâti abrite et guide le barillet en rotation. Ce tour multibroches ne répond donc pas au problème posé.

Ainsi, la présente invention a-t-elle pour but de fournir un tour automatique multibroches entièrement reconçu, de structure beaucoup plus simple, faisant intervenir un nombre moins élevé de pièces, qui comporte des commandes beaucoup plus directes pour accroître la rigidité et la précision de l'usinage, tout en offrant à l'utilisateur un encombrement nettement réduit, et un accès plus facile aux outils pour effectuer les réglages, avec un prix plus avantageux. Tous ces éléments sont en effet déterminants aussi bien pour l'utilisateur que dans la définition d'un site d'usinage où plusieurs dizaines de machines sont installées en batterie les unes derrière les autres, et les unes à côté des autres.

A cet effet, l'invention a pour objet un tour automatique multibroches, destiné à l'usinage de barres de matière, comprenant :
- une structure de support,
- un barillet ayant un alésage central et pouvant être déplacé en rotation par rapport à la structure de support, ce barillet supportant un ensemble de broches destinées au maintien des barres, et
- des moyens de façonnage des barres solidaires de la structure de support et comportant des chariots porte-outil qui sont agencés pour recevoir des outils d'usinage et qui sont pilotés par des cames de commande supportées et entraînées en rotation, ce tour étant caractérisé en ce que ladite structure de support est formée d'un corps central sur lequel est fixé un arbre de guidage qui s'étend longitudinalement du corps, les moyens de façonnage étant montés sur le corps central, à la périphérie de celui-ci, tandis que l'arbre de guidage est engagé dans l'alésage central, cet arbre et l'alésage assurant à eux seuls le guidage du barillet par l'intérieur, ce barillet pouvant se déplacer sur cet arbre de guidage en rotation, ainsi qu'en translation vers les moyens de façonnage, tandis que ces moyens de façonnage ainsi que les broches intégrées au barillet sont actionnés par l'extérieur, par des moyens d'entraînement périphériques.

Selon une autre caractéristique, le tour selon l'invention comporte des unités d'usinage modulaires formant lesdits moyens de façonnage des barres, ces unités comportant chacune, de façon intégrée, un chariot porte-outil, ainsi qu'une ou plusieurs cames destinées au déplacement dudit chariot.

On précisera aussi que chaque unité d'usinage modulaire comporte de façon intégrée son propre arbre à cames qui est supporté en rotation sur un châssis monté à l'extérieur du corps central.

Selon encore une autre caractéristique, chaque unité d'usinage modulaire comporte en outre une roue d'entraînement, ancrée mécaniquement sur l'arbre à cames.

Par ailleurs, les roues d'entraînement des unités d'usinage modulaires sont entraînées de façon concomitantes par une courroie extérieure crantée entourant le corps central.

En outre, chaque châssis rigide comporte une plaque frontale s'étendant radialement du corps central, chaque plaque supportant de façon rigide une extrémité de l'arbre à cames et, selon un mode de réalisation particulier, un canon de guidage.

Mais d'autres caractéristiques et avantages de la présente invention apparaîtront plus clairement à la lecture de la description détaillée qui suit, donnée à titre d'exemple et prise en référence aux dessins annexés dans lesquels :
- La figure 1 est une vue en élévation très schématique du tour automatique selon l'invention,
- la figure 2 est une vue du tour de la figure 1, représenté de façon partielle, et selon une demi-coupe faite selon la ligne II-II des figures 3 et 4; et sur laquelle certaines pièces ont été omises pour des raisons de clarté des dessins,
- la figure 3 est une vue faite, depuis l'arrière du tour des figures 1 et 2, selon la flèche III de la figure 2, et sur laquelle n'a été représentée que la première partie fonctionnelle du tour selon l'invention, formée d'un barillet de support des broches muni de sa courroie d'entraînement,
- la figure 4 est une vue similaire à la figure 3, mais représentant, selon la flèche IV de la figure 2, la deuxième partie fonctionnelle du tour selon l'invention, formée d'un corps rigide central muni d'unités d'usinage modulaires montées à sa périphérie et équipées de leur courroie d'entraînement,
- les figures 5 et 6 sont des vues respectivement de côté et de face (vue avant) du tour des figures 1 à 4, monté selon une première variante d'installation, sur une table non rigide,
- les figures 7 et 8 sont des vues similaires aux figures 5 et 6, mais représentant, selon une deuxième variante d'installation, le tour selon l'invention suspendu sur une potence par des courroies pour lui donner un mouvement oscillant d'évacuation des copeaux, et
- la figure 9 est une vue de dessus d'un ensemble de tours en présence d'un opérateur, sur un site d'usinage.

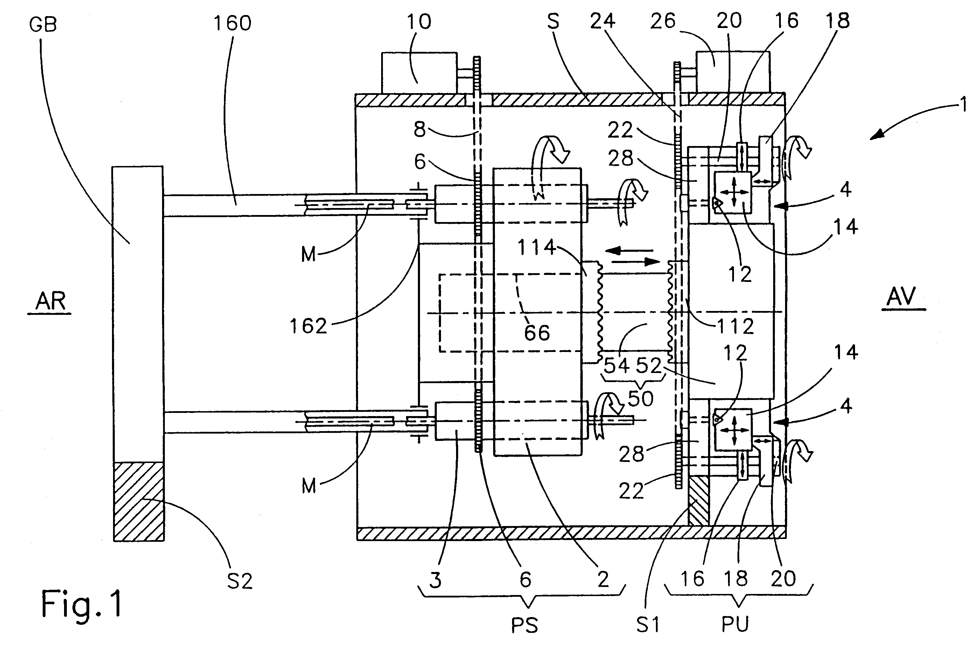

En se référant désormais à la figure 1, on décrira le principe de construction et de fonctionnement du tour automatique multibroches selon l'invention, représenté sur cette figure de façon très schématique et repéré par la référence générale 1.

Le tour 1 selon l'invention comporte un barillet 2 sur lequel sont regroupées ensemble une pluralité de broches référencées 3, décalées angulairement les unes par rapport aux autres. Sur cette figure, seules deux des broches 3 ont été représentées pour une meilleure compréhension du dessin, mais il est bien entendu qu'un nombre plus important de broches peut être prévu, par exemple 4, 6, 8, 10 ou 12.

Comme on le voit nettement sur cette figure, à l'intérieur de chaque broche est introduite une barre de matière référencée M, dont une extrémité libre fait saillie de la broche correspondante 3 pour être transformée, c'est-à-dire pour être usinée par enlèvement de copeaux et/ou par refoulement de la matière, par l'intermédiaire de moyens de façonnage, repérés par la référence générale 4, et décrits de façon plus détaillée ci-après.

Les barres de matière M sont généralement de longueur importante et sont supportées à leur autre extrémité par un guide-barre GB assurant également le ravitaillement en barres M dans le tour 1. Le guide-barre GB est fixé solidement à l'arrière du barillet 2 par des moyens de fixation classiques, tels que des ensembles vis-écrous, non représentés.

Les broches 3 comportent respectivement, à l'arrière de celles-ci, des roues d'entraînement 6 dont elles sont solidaires en rotation. Les broches 3 sont en elles-mêmes de conception classique et ne seront pas décrites de façon plus détaillée.

Les roues d'entraînement 6 sont, dans ce mode de réalisation, formées par des poulies extérieurement crantées sur lesquelles est engagée une première courroie d'entraînement crantée 8 capable d'entraîner les roues d'entraînement 6 et donc les différentes barres de matière M ensemble et de façon concomitante, par l'intermédiaire des broches 3.

La courroie 8 est en prise avec un premier moteur d'entraînement 10 monté fixement sur un cadre souple S que l'on décrira ci-après de façon plus détaillée.

Ainsi, les roues d'entraînement ou poulies 6, la courroie crantée 8 et le moteur 10 constituent des premiers moyens d'entraînement destinés à entraîner les broches 3 en rotation, autour de leur axe de rotation, non représenté.

On comprend par ailleurs que ces éléments qui viennent d'être décrits constituent une première partie fonctionnelle du tour 1 capable d'assurer l'alimentation et l'entraînement des barres, cette partie qui est référencée PS étant dite partie de support des barres.

Comme on l'a précisé ci-avant, le tour automatique 1 selon l'invention comporte des moyens de façonnage 4 des barres de matière M, ces moyens permettant l'usinage, notamment par enlèvement de copeaux et/ou par déformation à froid de la matière constituant les barres. A cet effet, ces moyens de façonnage 4 comportent une pluralité d'outils 12 représentés ici de façon très schématique sous la forme de plaquettes de coupe.

Les moyens de façonnage 4 comportent en outre des chariots porte-outil 14 pouvant se déplacer au moins selon un axe de travail, et de préférence selon deux, repérés généralement, dans la technique en cause, par les références X et Z. Ces types de chariot qui sont dits chariots croisés sont d'une conception classique et ne seront pas décrits ici de façon plus détaillée.

Sur chacun de ces chariots 14 est monté fixement, par l'intermédiaire de brides et de vis non représentées, l'un des outils 12, de sorte que les chariots 14 assurent, lors de l'usinage, le déplacement de chaque outil, individuellement, par rapport aux barres M.

Les moyens de façonnage 4 comportent en outre plusieurs cames de commande 16 et 18 qui sont conformées pour piloter le déplacement approprié des outils 12, via les chariots porte-outil 14. Dans le mode de réalisation préféré, et de façon avantageuse, on remarque que le déplacement de chaque chariot, et donc de chaque outil 12, est piloté directement par deux des cames susmentionnées, la première, référencée 16, étant une came plate classique à contour profilé tandis que la seconde, référencée 18, est une came cloche aussi de forme classique, c'est-à-dire profilée en bout.

On précisera ici que les deux cames, respectivement 16 et 18, agissent par contact direct sur les chariots porte-outil 14 respectifs, et donc sans interposition d'organes tels que des bras ou des leviers intermédiaires soumis à des efforts de flexion.

Ainsi, chaque outil 12 ainsi que ses éléments de support formés par l'un des chariots 14, et ses moyens de commande formés par les cames 16 et 18, constituent ensemble, au sein des différents moyens de façonnage 4, un poste d'usinage ou de travail où sont effectuées une ou plusieurs opérations d'usinage spécifiques de l'extrémité libre correspondante d'une des barres de matière M. Comme on le comprend, c'est le passage successif de l'extrémité libre usinée des barres de matière M, à ces différents postes de travail, qui assure la transformation de la matière, et lui fournit les formes et fonctions souhaitées.

A cet effet, on remarquera qu'à chaque poste de travail, les deux cames 16 et 18 sont montées sur un seul et unique arbre à cames 20 sur lequel est engagée fixement, notamment en rotation, une roue d'entraînement 22, formée par une poulie extérieurement crantée. Les roues d'entraînement 22 des arbres 20 sont en prise avec une courroie d'entraînement crantée 24 entraînée par un deuxième moteur 26 qui est monté fixement sur le cadre souple S. Ainsi, à chaque poste d'usinage, au sein de chaque moyen de façonnage 4, les deux cames 16 et 20 qui sont montées sur un même arbre 20, sont entraînées en rotation de façon concomitante, via une roue d'entraînement 22, sous l'action du second moteur d'entraînement 26.

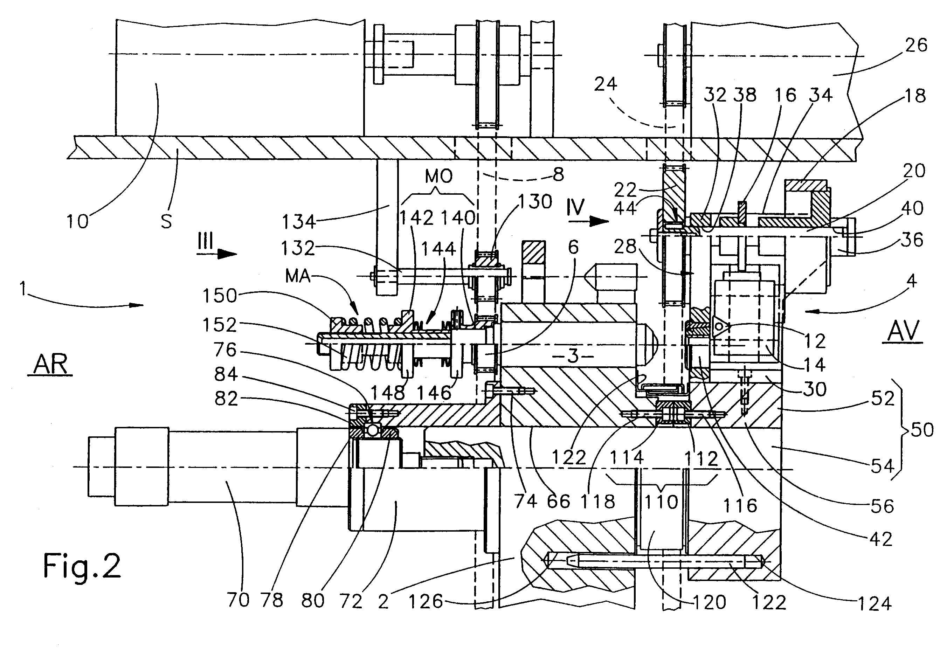

Dans la suite de la description, on désignera par "avant" et "arrière" les régions du tour 1 référencées respectivement AV et AR, conformément à la position du tour tel que représenté aux figures 1 et 2. Ainsi, le barillet 2 et les barres M s'étendent essentiellement vers l'arrière AR du tour 1, tandis que les moyens de façonnage 4 sont positionnés essentiellement vers l'avant AV.

En se référant désormais plus particulièrement à la figure 2, on décrira de façon plus détaillée les éléments constitutifs du tour automatique selon l'invention, qui ont été décrits ci-avant en rapport avec la figure 1. On remarquera que sur cette figure les courroies d'entraînement crantées respectivement 8 et 24 ont été représentées uniquement de façon partielle, en traits interrompus.

Comme on le voit sur cette figure, à chaque poste d'usinage, un chariot porte-outil 14, deux cames 16 et 18, ainsi que la roue d'entraînement 22 sont montés sur un châssis rigide 28 qui porte et guide en rotation l'arbre à cames 20 supportant les éléments rotatifs 16, 18 et 22. Plus particulièrement, chaque châssis rigide 28 est constitué de quatre plaques, à savoir une plaque de base 30, une plaque frontale ou avant 32, une plaque latérale 34 et une plaque arrière 36. Ces quatre plaques sont maintenues fixement entre elles par des moyens de fixation classiques non représentés, tels que par exemple par vissage, soudage ou collage. Conformément à un autre mode de réalisation non représenté, ces quatre plaques 30, 32, 34 et 36 peuvent venir de matière en étant réalisées de façon monobloc, par moulage d'une seule pièce.

Le châssis rigide 28 ainsi constitué de ses quatres plaques 30, 32, 34 et 36 comporte deux portées respectivement 38 et 40 qui supportent l'arbre à cames 20 en rotation.

Les portées 38 et 40 sont formées respectivement par des alésages de guidage ménagés, pour l'un, dans la plaque frontale 32, et pour l'autre, dans la plaque arrière 36.

Ainsi, les deux cames 16 et 18 étant supportées sur un même et unique arbre à cames 20, tandis que cet arbre à cames 20 et un chariot porte-outil correspondant 14 sont montés et positionnés précisément ensemble sur un même châssis rigide 28, on comprend que l'on obtient, lors du façonnage de la matière de la barre M, des géométries d'usinage qui ne varient pas, quelle que soit la vitesse de rotation de la roue d'entraînement 22, et donc quel que soit l'avancement de la courroie crantée d'entraînement 24.

On remarque de plus que dans ce mode de réalisation, la plaque frontale 32 comporte un canon de guidage 42 de structure classique, maintenu par coincement dans celle-ci, et destiné à recevoir l'extrémité libre de la barre de matière M, lors de l'usinage. On comprend donc que chaque plaque frontale 32 supporte de façon rigide une extrémité d'un arbre à cames 20 et un canon de guidage 42 qui sont donc positionnés l'un par rapport à l'autre de façon extrêmement précise et stable. Ainsi, l'entraxe entre un arbre à cames 20 et un canon de guidage 42 correspondant reste constant, quelles que soit les contraintes subies par le tour 1.

Ainsi, on comprend de ce qui vient d'être décrit que lesdits moyens de façonnage 4 sont ménagés respectivement sous la forme d'unités d'usinage modulaires comportant chacune, de façon intégrée, les moyens d'usinage, c'est-à-dire ici un outil de coupe 12, leurs moyens support et leurs moyens de commande, à savoir un chariot porte-outil 14 et les deux cames 16 et 18 destinées au déplacement du chariot, ainsi qu'une partie des moyens d'entraînement desdites cames 16 et 18, formée par la roue d'entraînement 22.

Selon un mode de réalisation non représenté, uniquement une came peut être prévue sur chaque unité d'usinage pour effectuer une opération de façonnage simplifiée, selon un seul axe. Dans une variante de réalisation non représentée, les canons de guidage 42 peuvent être omis. On comprend aussi que chaque unité d'usinage modulaire 4 telle que décrite forme un poste de travail en soi, au niveau duquel une ou plusieurs opérations différentes de façonnage, ici par enlèvement de copeaux, sont réalisées. A cet effet, et comme on l'expliquera ci-après, les extrémités des barres de matière M viennent successivement se présenter à ces postes d'usinage par des déplacements combinés du barillet 2. Les outils de coupe ont été représentés sur les figures 1 et 2 sous la forme de plaquettes d'usinage destinées au travail dit par chariotage, c'est-à-dire par des mouvements combinés selon plusieurs axes. On précisera que ces plaquettes peuvent être remplacées par d'autres outils, tels que des forets, permettant le perçage axial des barres M.

On remarquera donc que de façon avantageuse, chaque poste d'usinage comporte son propre arbre à cames 20 qui agit sur un chariot porte-outil 14 d'une façon la plus directe possible, c'est-à-dire uniquement par l'intermédiaire des cames de commande que l'arbre supporte en rotation, le tout étant monté sur un châssis commun.

Qui plus est, chaque unité d'usinage modulaire 4 comporte une roue d'entraînement 22 faisant partie des seconds moyens d'entraînement du tour 1 selon l'invention, cette roue étant ancrée mécaniquement sur l'arbre à cames 20 correspondant, par des moyens de liaison en rotation classiques, tels que des ensembles rainures-clavettes, référencés 44. On comprend donc que les éléments qui viennent d'être décrits constituent une deuxième partie fonctionnelle du tour 1, référencée PU, et dite partie d'usinage de la matière (figure 1).

Par ailleurs, le tour 1 selon l'invention comporte un corps rigide central 50 constitué d'un manchon 52 et d'un axe ou arbre support 54 engagé fixement par chassage ou collage dans le manchon 52. Conformément à un autre mode de réalisation, non représenté, le manchon 52 et l'axe 54 peuvent venir de matière en étant réalisés, par exemple, par moulage. Comme on peut le constater, notamment sur la figure 2, les plaques de base 30 des unités d'usinage modulaires 4 sont montées fixement sur le corps central 50, par exemple, par des vis 56 (une étant uniquement représentée sur la figure) engagées radialement dans le manchon 52.

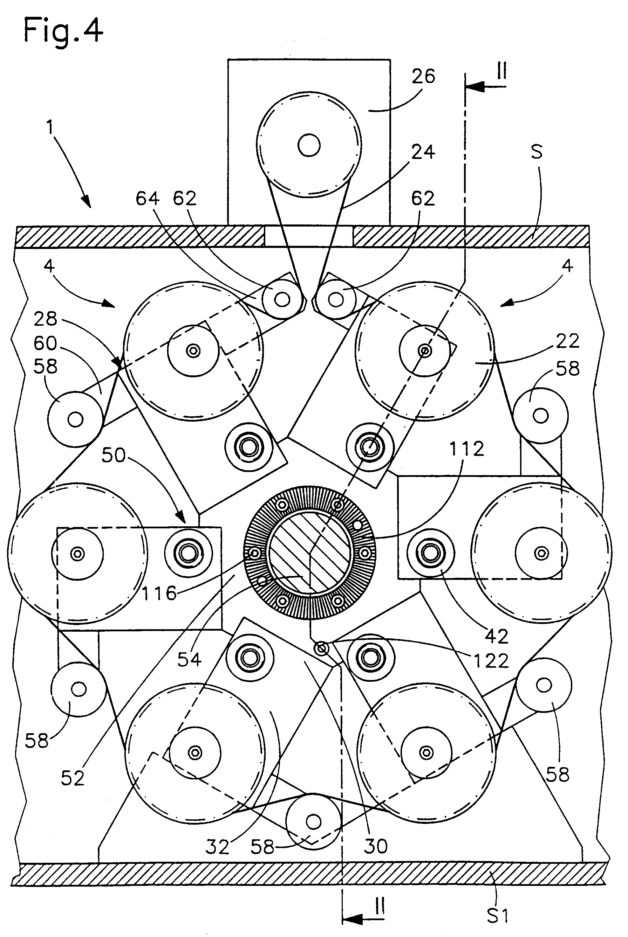

Comme on le voit plus particulièrement sur la figure 4, le tour 1 selon l'invention comporte, dans cet exemple, six unités d'usinage modulaires 4, montées de façon périphérique autour du corps rigide central 50, selon une disposition dite en éventail ou en satellite.

Comme on le voit sur cette figure, toutes les roues d'entraînement extérieurement crantées 22 des six unités d'usinage 4 sont entraînées ensemble de façon simultanée, par l'intermédiaire de la courroie d'entraînement périphérique 24 qui entoure la partie d'usinage PU. La courroie périphérique 24 est tendue sur ces roues 22 par l'intermédiaire de galets presseurs 58 montés libres en rotation sur des bras 60 qui s'étendent respectivement des plaques frontales 32 en direction radiale et qui sont fixés sur celles-ci, par exemple par vissage. Par ailleurs, les deux unités d'usinage modulaires 4 qui sont les plus proches du moteur 26 comportent des poulies de renvoi 62 de même supportées à distance des roues d'entraînement 22, en direction radiale, dans un même plan, par l'intermédiaire d'autres bras 64 respectivement solidaires de deux des plaques frontales 32, également par vissage.

En se reportant désormais à la figure 2, on remarquera que le barillet 2 est guidé uniquement par l'intérieur en étant monté directement par un ajustement coulissant sur l'axe ou arbre support 54 qui s'étend longitudinalement du corps central 50. A cet effet, le barillet 2 comporte un alésage de même central, référencé 66, dans lequel est engagé l'axe support 54. Ainsi, le barillet 2, grâce à cet engagement, et grâce à ce maintien, est positionné et peut se déplacer librement en translation ainsi qu'en rotation, par rapport au tour 1, directement et essentiellement par un guidage intérieur sur le corps central 50 qui porte à sa périphérie les unités d'usinage modulaires 4 et la courroie d'entraînement 24. On comprend donc que l'axe support 54 du corps central 50 et l'alésage 66 du barillet 2 constituent les moyens de guidage de ce barillet. On notera ici que le corps central 50 forme la partie essentiellement rigide du tour qui supporte à elle seule le barillet 2 ainsi que toutes les unités d'usinage modulaires 4.

L'axe support 54 se prolonge à l'arrière du barillet 2 par la disposition d'un moyen d'actionnement, notamment pneumatique, formé par un vérin 70, qui est monté fixement, notamment par vissage, sur l'axe support 54 dans le prolongement de celui-ci, à son extrémité libre. Le barillet 2 comporte, du côté opposé au corps central 50, une douille épaulée 72 montée fixement sur le barillet 2 par un ensemble de vis 74, dont une seule est représentée sur la figure 2.

Le barillet 2 est assujetti en translation à la partie mobile du vérin 70 par l'intermédiaire de la douille 72, avec interposition d'un roulement 76, par exemple un roulement à billes. Le roulement 76 est maintenu fixement par sa bague intérieure, non référencée, sur la partie mobile du vérin 70 via une bague de contre-appui 70 et un écrou 80, directement vissé sur le vérin 70. Le roulement 76 est en outre maintenu axialement de façon fixe à l'intérieur de la douille 72, d'une part, contre un épaulement, non référencé, ménagé à l'arrière de cette douille, et d'autre part, contre une couronne 82 maintenue solidaire de la douille 72 par un ensemble de vis 84, dont une seule est ici représentée.

Ainsi, on constate que le barillet 2, grâce à la douille 72, est attelé à la partie mobile du vérin 70 et peut se déplacer en translation sous l'action de celui-ci du fait de l'accouplement en translation fourni par le montage du roulement à billes 76. Toutefois, grâce à ce roulement, le barillet 2 est mobile en rotation par rapport au vérin 70. On précisera que le vérin 70 comporte un ensemble de conduits pneumatiques qui assurent la circulation d'air dans celui-ci; ces conduits, non représentés, étant reliés à une centrale de commande classique, de même non représentée.

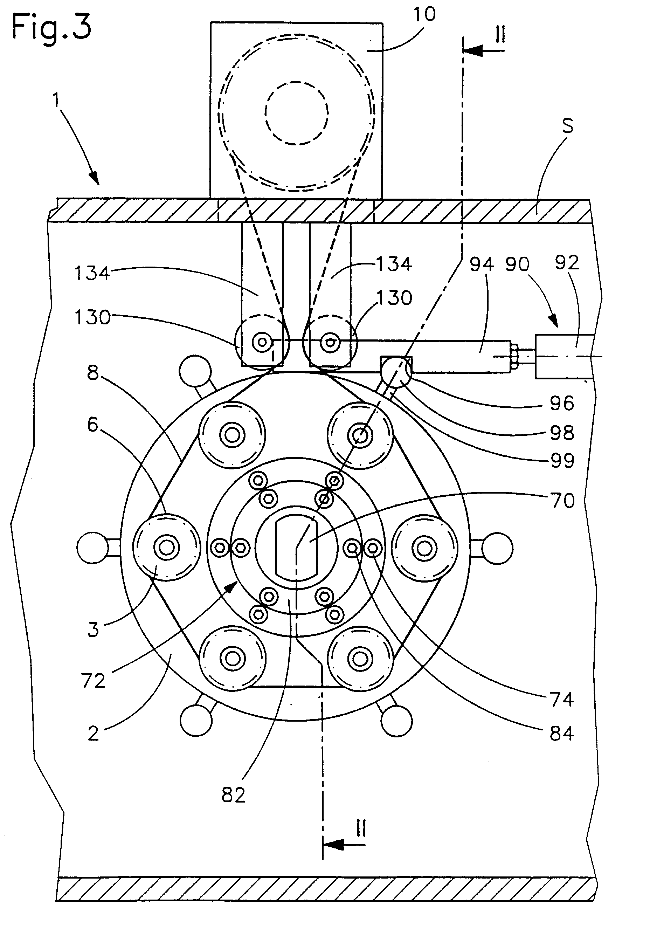

Comme on le voit plus particulièrement sur la figure 3, le tour 1 selon l'invention comporte de plus un dispositif 90 pilotant le déplacement angulaire pas à pas du barillet 2 lorsqu'il est tiré vers l'arrière AR par le vérin 70. Ce dispositif comporte un vérin 92 alimenté de façon pneumatique par des moyens de commande, non représentés, et dont la partie mobile est pourvue d'un doigt 94 comportant une encoche 96 conformée pour recevoir la tête 98 d'une goupille d'indexage 99 faisant saillie extérieurement et en direction radiale, depuis le pourtour extérieur du barillet 2. Ainsi, lorsque le barillet 2 est entraîné en translation, vers l'arrière AR, par le vérin 70, la tête 98 de l'une des goupilles 99 vient s'engager dans l'encoche 96, puis la sortie du doigt 94 déplace le barillet 2 angulairement, sur l'axe support 54. Le vérin 70 ramène ensuite le barillet 2 muni des barres de matière M, vers l'avant AV, c'est-à-dire vers les unités d'usinage 4 pour une nouvelle opération d'usinage. Entre temps, le doigt 94 est rappelé dans sa position d'origine représentée à la figure 3 pour être prêt à recevoir une autre tête 98.

De plus, le tour 1 comporte des moyens 110 (figure 2) permettant le positionnement angulaire fixe du corps 50 par rapport au barillet 2, lors de l'usinage. Les moyens de positionnement angulaire 110 sont constitués par deux couronnes respectivement 112 et 114 comportant des dentures frontales, non référencées, se faisant face. La couronne 112 est montée fixement sur le manchon 52 du corps fixe 50, par l'intermédiaire de vis 116 dont une seule est représentée sur la figure 2, tandis que la couronne 114 est montée fixement sur le barillet 2 par l'intermédiaire d'un ensemble de vis 118 dont là aussi une seule est représentée. Ainsi, lorsque le barillet 2 s'approche suffisamment du corps central fixe 50, en étant poussé vers l'avant AV sous l'action du vérin 70, les dentures des couronnes 112 et 114 s'imbriquent pour positionner de façon angulaire et pour maintenir fixement en rotation le barillet 2 par rapport au corps fixe 50, et notamment par rapport aux six unités d'usinage modulaires 4. Lorsque ce positionnement relatif est effectué par l'imbrication des dentures en question, les barres de matière, non représentées, sont correctement positionnées pour pouvoir être usinées par les outils de coupe 12.

On remarquera que le tour 1 comporte en outre des moyens de protection de la denture des couronnes 112 et 114, ces moyens étant constitués par deux carters, l'un référencé 120 qui est monté solidaire du manchon 52 du corps 50, de façon coaxiale à la couronne dentée 112, et autour de celle-ci, l'autre référencé 122, qui est conformé pour venir s'imbriquer dans le carter 120 et qui est solidaire du barillet 2. Ces carters sont fixés respectivement au corps 50 et au barillet 2 par des moyens classiques, tels que par vissage ou soudage.

Par ailleurs, pour assurer l'engagement correct de l'extrémité usinée ou à usiner des barres de matière M dans les canon de guidage correspondants 42 des unités d'usinage modulaire 4, le tour 1 selon l'invention comporte un goujon de positionnement 122 qui est chassé dans le manchon 52 du corps fixe 50 et qui est conformé pour s'engager, lors de la poussée du barillet 2, dans l'un des alésages correspondants 124 ménagés longitudinalement dans ledit barillet.

Comme on le voit plus particulièrement sur la figure 3, la courroie crantée 8 qui est entraînée par le premier moteur 10, engrène avec les six roues d'entraînement crantées 6 des broches correspondantes 3. Ainsi, la courroie crantée 8 entoure les six roues d'entraînement référencées 6 si bien que celles-ci peuvent se déplacer de façon angulaire d'une position d'usinage à une autre, en restant entraînées par cette courroie 8, sans qu'il y ait de pincement de cette dernière.

Pour assurer la tension de la courroie 8, le cadre souple S comporte deux galets de renvoi 130 disposés au voisinage du barillet 2, et montés en porte-à-faux sur un axe 132 monté fixement, par exemple par vissage, sur une patte 134 s'étendant à la verticale du châssis S. Les galets de renvoi 130 peuvent se déplacer en rotation mais aussi en translation sur leur axe respectif 132. On remarque ainsi que les broches 2 sont entraînées par la courroie 8 selon une configuration dite extérieure ou périphérique.

On précisera encore ici que les broches 3 comportent chacune un mécanisme d'ouverture de pince, référencé MO. Ces pinces qui sont agencées respectivement à l'intérieur desdites broches ne sont pas représentées ici. Les broches 3 comportent de plus un mécanisme MA permettant l'avance de la barre de matière M à l'intérieur des broches 3.

Le mécanisme MO permettant l'ouverture de la pince de broche, qui ne sera pas décrit ici de façon détaillée car de structure classique, comporte deux manchons l'un fixe référencé 140 et l'autre mobile, référencé 142, avec interposition entre ceux-ci de moyens élastiques de compression, notamment des rondelles ressort 144. Les deux manchons respectivement 140 et 142 comportent des flasques respectivement 146 et 148 qui sont conformés pour pouvoir coopérer avec des cames, non représentées, disposées dans une position angulaire prédéterminée du barillet pour permettre l'ouverture de la pince de broche, notamment lorsque la barre de matière M a subi les usinages appropriés et que la partie façonnée sur celle-ci a été tronçonnée. Ainsi par ce système de cames, non représentés, les deux flasques 146 et 148 sont sollicités l'un vers l'autre, ce qui entraîne le rapprochement du manchon coulissant 142 vers le manchon 140 maintenu sur un contre-appui, et de façon subséquente l'ouverture de la pince de broche. Sur une fraction de tour supplémentaire, le profil des cames, non représenté, permet un déplacement supplémentaire du manchon coulissant 142 et le déplacement vers l'avant de la bague 150, vissée à l'extrémité arrière de la broche 3. Ainsi, l'avance de la bague 150 du mécanisme MA permet l'avance de la barre à usiner M vers les moyens de façonnage 4 pour la présentation d'une nouvelle région à usiner. Lors du rapprochement de la bague 150 vers le manchon coulissant 142, un ressort de compression 152 interposé entre ces deux éléments est comprimé. Les deux ressorts 152 et 144 permettent le retour du manchon coulissant 142 et de la bague 150 vers leur position d'origine représentée à la figure 2, pour assurer la fermeture des pinces de broche.

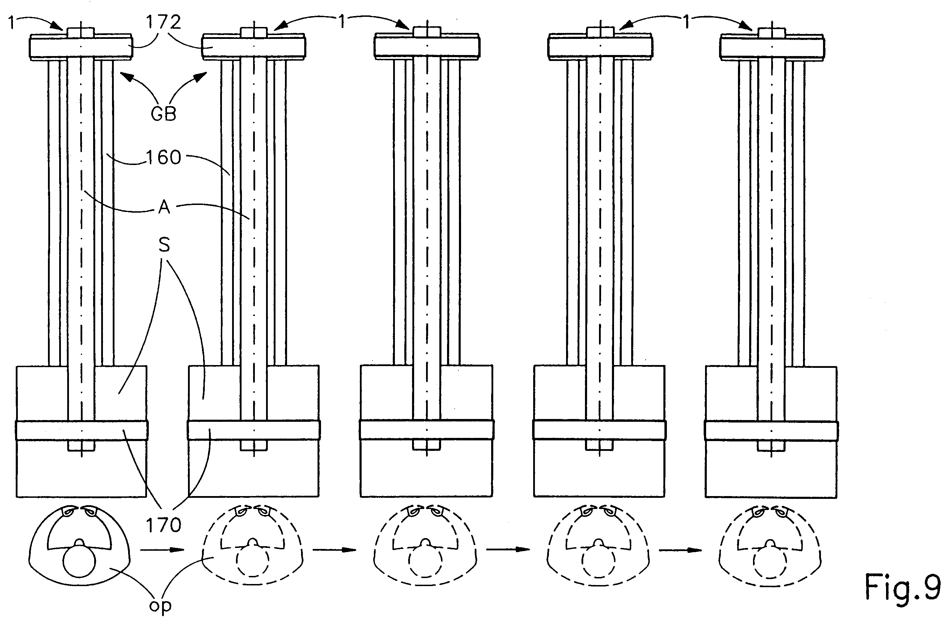

On comprend de ce qui vient d'être décrit que le tour 1 selon l'invention comporte des moyens de guidage du barillet 2 formés selon une configuration intérieure ou centrale par rapport au tour 1, tandis que les différents moyens d'entraînement, notamment des broches 3 et des unités d'usinage 4 formés respectivement par les courroies 8 et 24, ont une configuration extérieure ou périphérique qui laisse libre l'intérieur du tour 1 pour la disposition desdits moyens de guidage. De ce fait, et comme cela est représenté plus clairement à la figure 9, les réglages de la partie fonctionnelle d'usinage PU peuvent être effectués depuis l'avant AV du tour 1 puisque le cadre souple S est ouvert longitudinalement à ses deux extrémités.

Comme on le voit plus particulièrement sur la figure 9 où sont représentés plusieurs tours 1 conformes à l'invention, l'opérateur peut accéder de façon aisée aux organes à régler, et notamment aux cames 16 et 18, au chariot 14 et à l'outil 12, ce qui lui permet d'effectuer les réglages sans avoir à se déplacer de part et d'autre du tour. On a donc une configuration dite frontale qui offre un gain de place et permet au rapprochement des tours les uns à côté des autres.

Comme on le voit sur la figure 1, la partie d'usinage PU est posée sur un support S1 que l'on voit plus particulièrement à la figure 4 et qui a une forme générale de V. Sur ce support reposent deux des plaques frontales 32 ainsi que l'un des bras 60 qui supporte l'un des galets 58.

Le support S1 est maintenu fixement à l'intérieur du cadre souple S.

Le tour 1 est en outre supporté par l'intermédiaire d'un deuxième support S2 sur lequel repose l'arrière du guide-barre GB.

Comme cela est représenté de façon très schématique à la figure 1, le guide-barre GB comporte un ensemble de tubes 160 correspondant au nombre de broches 3 et associés respectivement aux broches 3, à l'arrière de celle-ci.

Les tubes de guidage 160 sent montés coulissants sur un plateau 162 qui est fixé à l'arrière du barillet 2, par des moyens de vissage classiques. Le guide-barre GB est donc attelé à l'arrière du barillet 2 par l'intermédiaire du plateau 162 qui autorise un déplacement relatif, en translation, du barillet 2 et des broches 3 par rapport au guide-barre GB, et notamment par rapport aux tubes 160.

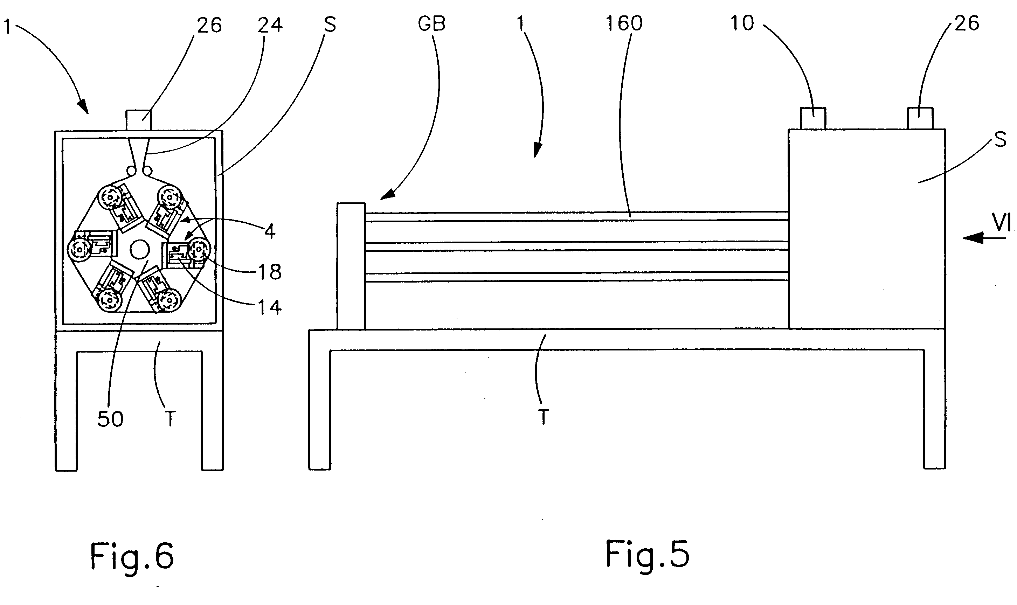

En se référant désormais aux figures 5 et 6, on décrira ci-après une première variante de l'installation du tour 1 selon l'invention. Comme on le voit sur ces figures, le cadre souple S ainsi que le guide-barre GB sont posés directement sur une table non-rigide T, présentant une structure ouverte. On comprend donc que les deux unités fonctionnelles du tour 1 selon l'invention, à savoir la partie support de barre PS qui est associée au guide-barre GB et la partie d'usinage PU qui est disposée à l'intérieur du cadre souple S, forment une structure autonome, auto-portée, qui peut travailler avec grande précision et avec un accès facile en pouvant être installée sur n'importe quel type de support sans que les déformations ou vibrations de ce support (ici la table non-rigide T) occasionne des dispersions dans la qualité de l'usinage. La rigidité du système étant concentrée autour du corps central 50 ainsi qu'au niveau des châssis rigides 28 qui supportent les moyens de commande, les moyens d'entraînement et les moyens de support des outils, on a pu fournir une configuration dont le cadre extérieur peut présenter des épaisseurs extrêmement faibles, tel que représenté pour le cadre souple S et la table T. On a donc réalisé un tour multibroches automatique à configuration frontale, d'une conception simple, la plus ajourée possible et donc de faible poids, avec des commandes directes et d'un encombrement tout aussi réduit.

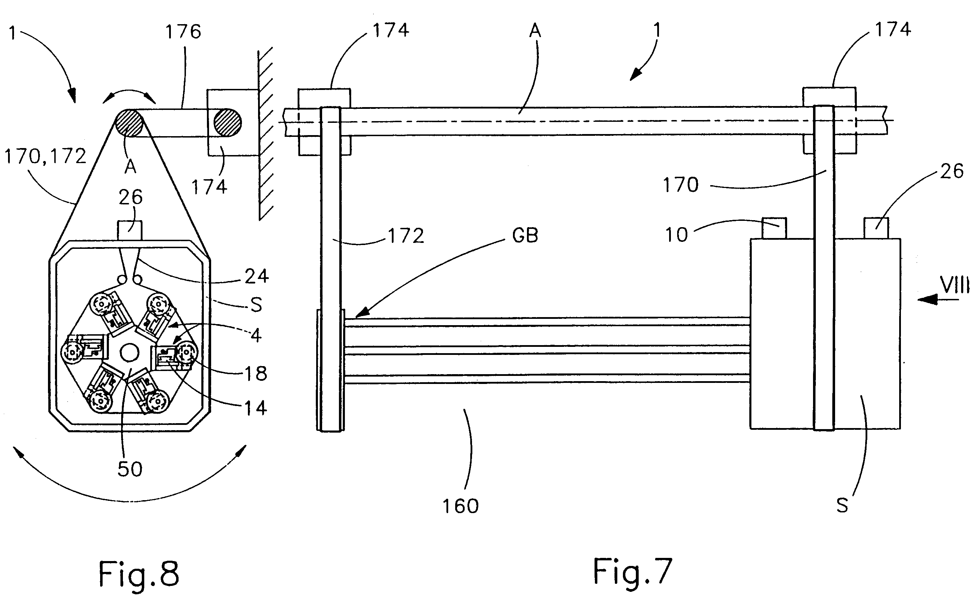

En se référant désormais aux figures 7 et 8, on décrira ci-après une deuxième variante de l'installation du tour 1 selon l'invention.

On voit que dans ce mode de réalisation, le tour 1 est suspendu sur une potence ou arbre A lié de façon rigide au sol par des moyens non représentés. Le tour 1 est maintenu sur cet arbre ou potence A par l'intermédiaire de deux chaînes ou câbles 170 et 172 entourant respectivement le cadre souple S et l'arrière du guide-barre GB. A cet effet, on remarque notamment sur la figure 8 que la forme du cadre souple S a été légèrement arrondie pour pouvoir mieux coopérer avec la chaîne ou câble 170. L'arbre ou potence A étant entraîné par un ou plusieurs moteurs à réducteur 174, par l'intermédiaire d'une ou plusieurs courroies ou chaînes 176, on peut donc fournir au tour 1, dans son ensemble, un mouvement rotatif oscillant, relativement lent, qui permet en cours d'usinage le dégagement des copeaux et l'extraction des pièces usinées.

Comme on l'a expliqué ci-avant, la figure 9 montre une batterie de tours 1 suspendus à plusieurs potences A et en face desquels un opérateur OP peut se déplacer en position frontale par rapport aux tours 1 pour effectuer les différents réglages et contrôler les opérations effectuées par les outils 12. On précisera aussi que sous ces tours 1, peuvent être placés respectivement différents bacs destinés à la récupération de ces copeaux (non représenté).

Bien que sur les figures 2 à 8 décrites ci-avant, on ait représenté un tour à six postes d'usinage, l'invention permet sans difficulté de construire suivant la demande des tours avec huit, dix, douze (etc.) postes d'usinage avec bien évidemment un barillet comportant le même nombre de broches 3, et cela puisque chaque poste d'usinage est constitué par une unité d'usinage modulaire 4 qui comporte son propre arbre à cames et ses commandes agissant directement sur son chariot 14. Ainsi, pour la conception d'un tour avec un nombre choisi de postes d'usinage, on peut utiliser un même type d'unité d'usinage modulaire 4 que l'on monte sur n'importe quel corps 50 ayant bien entendu un nombre approprié de faces pour le montage de ces unités. On précisera aussi que, bien que les unités modulaires d'usinage 4 aient été décrites en association avec un canon de guidage 42 pour l'usinage de pièces sortant en porte-à-faux de la broche 3, on peut fournir un tour avec des postes d'usinage ne comportant pas ce type de canon, pour le travail sur des pièces ne sortant que de quelques millimètres de la broche correspondante. Le travail dit en canon fonctionne sur le principe connu des tours à poupée mobile et dans la configuration décrite, ce type de travail offre une précision d'usinage extrêmement importante du fait que les canons 42 sont montés sur la même pièce rigide (à savoir la plaque frontale 32) que les supports d'arbres à cames 20, ce qui fournit un entraxe fixe et élimine toutes les dispersions dues, dans les tours classiques, aux pièces intermédiaires.

## Revendications

1. Tour automatique multibroches, destiné à l'usinage de barres de matière, comprenant :
- une structure de support,
- un barillet (2) ayant un alésage central (66) et pouvant être déplacé en rotation par rapport à ladite structure de support, ce barillet supportant un ensemble de broches (3) destinées au maintien des barres (M), et
- des moyens de façonnage des barres (M) solidaires de ladite structure de support et comportant des chariots porte-outil (14) qui sont agencés pour recevoir des outils d'usinage (12) et qui sont pilotés par des cames de commande (16, 18) supportées et entraînées en rotation,
caractérisé en ce que ladite structure de support est formée d'un corps central (50) sur lequel est fixé un arbre de guidage (54) qui s'étend longitudinalement dudit corps (50), lesdits moyens de façonnage étant montés sur le corps central (50) à la périphérie de celui-ci, tandis que l'arbre de guidage (54) est engagé dans l'alésage central (66), cet arbre (54) et l'alésage (66) assurant à eux seuls le guidage du barillet (2) par l'intérieur, ce barillet (2) pouvant se déplacer sur cet arbre de guidage (54) en rotation, ainsi qu'en translation vers lesdits moyens de façonnage, tandis que ces moyens de façonnage ainsi que les broches (3) intégrées au barillet (2) sont actionnés par l'extérieur, par des moyens d'entraînement périphériques (8,24).

2. Tour selon la revendication 1, caractérisé en ce qu'il comporte des unités d'usinage modulaires (4) formant lesdits moyens de façonnage des barres (M), ces unités (4) comportant chacune, de façon intégrée, un chariot porte-outil (14), ainsi qu'une ou plusieurs cames (16, 18) destinées au déplacement dudit chariot (14).

3. Tour selon la revendication 2, caractérisé en ce que chaque unité d'usinage modulaire (4) comporte de façon intégrée son propre arbre à cames (20) qui est supporté en rotation sur un châssis (28) monté à l'extérieur du corps central (50).

4. Tour selon la revendication 3, caractérisé en ce que chaque unité d'usinage modulaire (4) comporte en outre une roue d'entraînement (22), ancrée mécaniquement sur l'arbre à cames (20).

5. Tour selon la revendication 4, caractérisé en ce que les roues d'entraînement (22) des unités d'usinage modulaires (4) sont entraînées de façon concomitante par une courroie extérieure crantée (24) entourant le corps central (50).

6. Tour selon la revendication 3, caractérisé en ce que chaque châssis rigide comporte une plaque frontale (32) s'étendant radialement du corps central (50), chaque plaque (32) supportant de façon rigide une extrémité de l'arbre à cames (20) ainsi qu'un canon de guidage (42).

7. Tour selon la revendication 6, caractérisé en ce que chaque unité d'usinage modulaire (4) comporte deux cames (16, 18) supportées toutes les deux sur un même arbre (20) et pilotant le même chariot porte-outils (14).

8. Tour selon la revendication 2, caractérisé en ce que les unités d'usinage modulaire (4) sont montées autour du corps central (50) selon une disposition dite en éventail.

9. Tour selon la revendication 1, caractérisé en ce que les moyens d'entraînement périphériques qui actionnent les broches (3) par l'extérieur sont formés par une courroie crantée (8) entourant les broches (3).

10. Tour selon l'une quelconque des revendications précédentes, caractérisé en ce que le corps central (50) muni des unités d'usinage modulaire (4) est supporté fixement à l'intérieur d'un cadre souple (S), tandis que le barillet (2) est supporté par l'intermédiaire d'un guide-barre (GB) monté fixement à l'arrière de celui-ci.

## Claims

1. Multi-spindle automatic lathe, intended for machining bars of material, comprising :
- a support structure,
- a spindle carrier (2) having a central bore (66) and adapted to be displaced in rotation and translation with respect to said support structure, and on which spindles (3) intended for holding bars (M) are assembled together, and
- means for shaping bars (M) fixedly attached to said support structure and including tool bearing carriages (14) conformed so as to receive machining tools (12) and which are directed by control cams (16, 18) supported and driven in rotation,
characterized in that said support structure is formed of a central body (50) on which a guiding shaft (54) is fixed which extends longitudinally along said body (50), said shaping means being mounted on said central body (50), at its periphery, whereas said guiding shaft (54) engages with said central base (66), this shaft (54) and the base (66) ensuring by themselves the interior guidance of the spindle carrier (2), this spindle carrier (2) being rotationally displaceable around said guiding shaft (54), as well as being translationally displaceable towards said shaping means, while these shaping means and the spindles (3) integrated with the spindle carrier (2) are actuated from the exterior by peripheral driving means (8, 24).

2. Lathe according to claim 1, characterized in that it includes modular machining units (4) forming said means for shaping bars (M), each of such units (4) including, in an integrated manner, a tool bearing carriage (14) as well as one or several cams (16, 18) intended for the displacement of said carriage (14).

3. Lathe according to claim 2, characterized in that each modular machining unit (4) includes, in an integrated manner, its own cam shaft (20) which is supported for rotation on a frame (28) mounted on the exterior of the central body (50).

4. Lathe according to claim 3, characterized in that each modular machining unit (4) further includes a driving wheel (22) mechanically anchored to the cam shaft (20).

5. Lathe according to claim 4, characterized in that the driving wheels (22) of the modular machining units (4) are driven in concomitant manner by an exterior notched belt (24) surrounding the central body (50).

6. Lathe according to claim 3, characterized in that each rigid frame includes a frontal plate (32) extending radially from the central body (50), each plate (32) supporting in a rigid manner one end of the cam shaft (20) as well as a guide pipe (42).

7. Lathe according to claim 6, characterized in that each modular machining unit (4) includes two cams (16, 18), both supported on a common shaft (20) and directing the same tool bearing carriage (14).

8. Lathe according to claim 2, characterized in that the modular machining units (4) are mounted around the central body (50) according to a fan-shaped arrangement.

9. Lathe according to claim 1, characterized in that the peripheral driving means which actuate the spindles (3) from the exterior are formed by a notched belt (8) surrounding the spindles (3).

10. Lathe according to any one of the preceding claims, characterized in that the central body (50) provided with the modular machining units (4) is fixedly supported within a non-rigid frame (S), while the spindle carrier (2) is supported by means of a guide bar (GB) fixedly mounted behind the latter.

## Patentansprüche

1. Automatische Mehrspindel-Drehmaschine, bestimmt zur Bearbeitung von Stangenmaterial, umfassend:
- eine Supportstruktur,
- eine relativ zu der Supportstruktur drehverlagerbare Trommel (2) mit einer zentralen Bohrung (66), welche Trommel eine Gruppe von für die Halterung der Stangen (M) bestimmten Spindeln (3) abstützt, und
- Mittel für die Bearbeitung der Stangen (M), die mit der Supportstruktur verbunden sind und Werkzeugträgerschlitten (14) umfassen, welche für die Aufnahme von Bearbeitungswerkzeugen (12) ausgebildet und von abgestützten und zur Drehung antreibbaren Steuernocken (16, 18) gesteuert sind,
dadurch gekennzeichnet, daß die Supportstruktur von einem Zentralkorpus (50) gebildet ist, auf dem eine sich längs des Zentralkorpus (50) erstreckende Führungswelle (54) befestigt ist, daß die Bearbeitungsmittel an dem Zentralkorpus (50) an dessen Peripherie montiert sind, während die Führungswelle (54) in der zentralen Bohrung (66) aufgenommen ist, welche Führungswelle (54) und Bohrung (66) allein die Führung der Trommel (2) von innen sicherstellen, welche Trommel (2) auf der Führungswelle (54) rotationsverlagerbar wie auch translatorisch in Richtung zu den Bearbeitungsmitteln verlagerbar ist, welche Bearbeitungsmittel wie auch die in die Trommel (2) integrierten Spindeln (3) von außen durch periphere Antriebsmittel (8, 24) betätigt sind.

2. Drehmaschine nach Anspruch 1, dadurch gekennzeichnet, daß sie die Bearbeitungsmittel der Stangen (M) bildende modulare Bearbeitungseinheiten (4) umfaßt, welche Einheiten (4) jede in integrierter Form einen Werkzeugträgerschlitten (14) sowie einen oder mehrere für die Verlagerung des Schlittens (14) bestimmte Nocken (16, 18) umfaßt.

3. Drehmaschine nach Anspruch 2, dadurch gekennzeichnet, daß jede modulare Bearbeitungseinheit (4) in integrierter Form ihre eigene Nockenwelle (20) umfaßt, die drehbeweglich auf einem außerhalb des Zentralkorpus (50) montierten Chassis (28) abgestützt ist.

4. Drehmaschine nach Anspruch 3, dadurch gekennzeichnet, daß jede modulare Bearbeitungseinheit (4) ferner ein mechanisch auf der Nockenwelle (20) verankertes Antriebsrad (22) umfaßt.

5. Drehmaschine nach Anspruch 4, dadurch gekennzeichnet, daß die Antriebsräder (22) der modularen Bearbeitungseinheiten (4) gemeinsam von einem äußeren, den Zentralkorpus (50) umschließenden Zahnriemen (24) angetrieben sind.

6. Drehmaschine nach Anspruch 3, dadurch gekennzeichnet, daß jedes starre Chassis eine sich radial bezüglich des Zentralkorpus (50) erstreckende Frontalplatte (32) umfaßt, wobei jede Frontalplatte (32) starr ein Ende der Nockenwelle (20) wie auch ein Führungsrohr (42) abstützt.

7. Drehmaschine nach Anspruch 6, dadurch gekennzeichnet, daß jede modulare Bearbeitungseinheit (4) zwei auf einer gleichen Welle (20) abgestützte und denselben Werkzeugträgerschlitten (14) steuernde Nocken (16, 18) umfaßt.

8. Drehmaschine nach Anspruch 2, dadurch gekennzeichnet, daß die modularen Bearbeitungseinheiten (4) um den Zentralkorpus (50) in fächerartiger Anordnung montiert sind.

9. Drehmaschine nach Anspruch 1, dadurch gekennzeichnet, daß die peripheren Antriebsmittel, die die Spindeln (3) von außen antreiben, von einem Zahnriemen (8) gebildet sind, der die Spindeln (3) umschließt.

10. Drehmaschine nach einem der vorangehenden Ansprüche, dadurch gekennzeichnet, daß der mit den modularen Bearbeitungseinheiten (4) versehene Zentralkorpus (50) fest im Innern eines nachgiebigen Rahmens (S) abgestützt ist, während die Trommel (2) über eine hinten an ihm fest montierte Stangenführung (GB) abgestützt ist.
